# EUROPEAN PATENT SPECIFICATION

(11) **EP 0 395 884 B1**
(45) Date of publication and mention of the grant of the patent: **19.05.1993**
(21) Application number: 90105988.1
(22) Date of filing: 29.03.1990
(51) Int. Cl.: B01J 3/04, B22F 3/14, B30B 15/34

(54) **Pressure vessel for hot isostatic pressing with means for cooling**
Hochdruckgefäss zum isostatischen Heisspressen mit Anordnungen für Abkühlung
Autoclave pour de pressage isostatique à chaud avec des moyens de réfrigération

(30) Priority: 04.04.1989 SE 8901172
(43) Date of publication of application: 07.11.1990
(73) Proprietor: ASEA BROWN BOVERI AB, 721 83 Västeras (SE)
(72) Inventor: Bergman, Carl, S-723 41 Västeras (SE); Ohlsson, Lars, S-253 67 Helsingborg (SE)
(74) Representative: Boecker, Joachim, Dr.-Ing.

(56) References cited:
- EP-A- 0 170 728
- DE-C- 3 028 773

## Description

The invention relates to a press for hot isostatic pressing (HIP) according to the precharacterising part of claim 1. Such type of press is known from DE-C-3 028 773. The press is provided with means for rapid cooling of the articles after pressing by causing cooled pressure medium to circulate through the furnace chamber.

Presses for hot isostatic pressing are known in a variety of designs and utilized, for example, for manufacturing solid bodies from powder materials, or for condensing castings. Such a press is able to operate within wide temperature and pressure ranges, usually between 500 and 2200°C and 500 and 2000 bar. As pressure medium an inert gas, such as argon, is usually used, but also liquid pressure mediums can be used.

The isostatic press substantially consists of a pressure vessel in which a furnace is arranged which is usually adapted to be heated by means of electric heating elements and which is surrounded by a heat-insulating mantle and a bottom insulation plate. Between the heat-insulating mantle and the pressure vessel wall, which is usually provided with some form of cooling means, a space containing pressure medium is provided which is colder than the furnace chamber.

For many applications it is of interest to be able to rapidly cool the furnace chamber in order for the articles contained therein to attain the proper material properties, and also to make possible a more rapid withdrawal of the articles and thus a reduced cycle time.

To bring about a rapid cooling of the furnace chamber in a hot isostatic press, it is known to provide communication between the furnace chamber and the colder space in the press and allow cold gas from the colder space to circulate through the furnace chamber. It is also possible to effect additional cooling of the gas by allowing it to pass through a heat exchanger or some form of heat-absorbing material. Cooling can also be achieved by providing the press with a device for injecting cold gas from a source outside the press into the furnace chamber. Such a press is known from EP-A-85 20 0706, in which the cooling is effected by allowing an injector, which is connected to a high pressure pipe for cold gas and is mounted inside a housing which communicates through a valve with the space between the pressure vessel wall and the insulating mantle, to inject cold gas into the furnace chamber. The insulating mantle around the furnace chamber is provided with openings in its upper part so as to promote gas circulation.

The disadvantages of the hitherto devices for effecting a rapid cooling of a HIP furnace is that a non-uniform cooling of the articles is obtained when gas which is considerably colder than the gas in the furnace chamber flows through the articles. This may lead to an uneven quality of the articles. Also, stresses may arise in the articles which lead to the formation of cracks making the articles unfit for sale. The prior art is especially detrimental if the load is a large article such as a ring for a gas turbine or the like, where an uneven cooling could destroy the whole article. The same kind of disadvantages are found with cooling flows that are introduces from the top part of the loading space.

The invention aims at developing a press for hot isostatic pressing of the above-mentioned kind which is simple in design and enables rapid and uniform cooling after treatment of even large articles.

To achieve this aim the invention suggests a press for hot isostatic pressing according to the introductory part of claim 1, which is characterized by the features of the characterizing part of claim 1.

Further developments of the invention are characterized by the features of the additional claims.

The cooling pressure medium which is injected into the loading space has a temperature which is lower, but not considerably than the temperature of the articles. The temperature of the injected pressure medium is regulated by mixing of the hot pressure medium, which is recirculated down along the gap between the tube and the heat-insulating mantle, and pressure medium which has been in contact with the cooled vessel wall.

By using a large flow of cooling pressure medium, which has a temperature that is not significantly lower than the temperature of the articles, and by injecting this flow from below to move upwards into the loading space taking up heat from the articles, a very stable flow is obtained with a very low tendency to form internal currents. Thus a very even cooling of the articles is obtained. This has many advantages compared with the previously known arrangements for rapid cooling, in which introduction of a cooled gas in the loading space led to some parts of the load being more rapidly cooled than others, thus leading to rejection of the pressed articles.

To obtain an optimum flow of pressure medium in the pressure vessel during the cooling phase, means for injecting and guiding the flow are provided in the pressure vessel such that the cooling flow moves through the loading space in an upward direction, and at the top of the loading space the flow is deflected and guided downwards along the gap that is formed between the tube around the loading space and the heat-insulating mantle. The warm pressure medium is forced down along the gap by the impact of the cooler gas being injected into the loading space, thus adding more pressure medium into the loading space. At the bottom of the loading space or connected thereto by, for example, an insulated tube, there is arranged a pump means for injecting pressure medium into the loading space. A part of the pressure medium from said gap is sucked in by the pump means and mixed with a propellant flow of cooled pressure medium, thus injecting into the loading space a pressure medium which has a temperature that is lower, but not considerably lower than the temperature of the articles. The heat-insulating mantle is provided with openings in its lower part. Part of warm pressure medium being forced down said gap will be sucked into the cooling loop in the cooler space of the vessel through openings in the heat-insulating mantle. To avoid damage to the pressure vessel wall or to the sleeve, or the like, inserted into the cooler space for directing the flow in the cooling loop, part of the gas cooled therein is recirculated into the cooling loop, thus bringing down the temperature of the warm pressure medium from the furnace chamber sucked into the cooling loop.

There is a balance between the amount of cooled pressure medium being mixed with warm pressure medium and injected into the loading space and the amount of warm pressure medium being sucked into the cooling loop, such that the amounts are approximately the same.

Rapid cooling of pressed articles is required, for example in the manufacture of Ni-base alloys. In order to impart suitable material properties to these alloys without demanding considerable heat treatment operations comprising heating and quenching after treatment in a hot isostatic press, it is a requirement that the articles can be rapidly cooled even when being located in the hot isostatic press. Ordinary treatment temperatures in a hot isostatic press are 1000-1400°C, and from there the articles should be cooled down to about 600°C at a rate of 40-150°C/min.

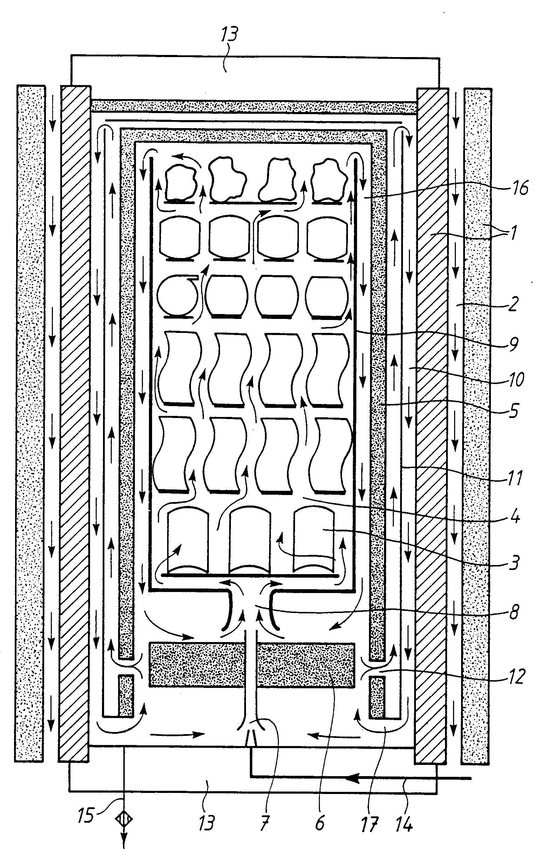

By way of example, the invention will now be described in greater detail with reference to the single figure showing a section through one embodiment of a hot isostatic press according to the invention.

The figure shows the press at the end of the HIP cycle. The wall 1 of the pressure vessel is provided with means for water cooling 2. The top and bottom of the pressure vessel are formed by end closures 13. The bottom end closure 13 is provided with lead-through tubes 14, 15 for the supply and discharge of gas, respectively. The articles 3 are loaded in the furnace chamber 4 which is surrounded by a heat-insulating mantle 5. A bottom insulation plate 6 is mounted separately at the bottom of the furnace chamber 4. The bottom insulation plate 6 is not tightly connected to the heat-insulating mantle 5. A tube 9 is arranged in the furnace chamber 4 surrounding the loading space. Two ejectors 7, 8 are arranged respectively below and above the bottom insulation plate 6. The lower ejector 7 is connected to a propellant gas system arranged outside the press. In the upper ejector 8, gas from the lower ejector 7 is mixed with hot gas from the furnace chamber 4. The upper ejector 8 may be formed with a special spacer nozzle provided with oblique, drilled holes to obtain a good spreading and a high velocity of the gas, thus achieving a shortened mixing distance of the gas. With such an ejector design, the provision of a long tube into the furnace chamber for mixing of propellant gas and sucked-in gas is avoided. However, the invention is also applicable to other embodiments of jet pumps. The gas flow driving the pump is small in relation to the total flow, and the temperature of the gas mixture obtained, which is introduced into the furnace chamber, is about 10% lower than the temperature in the furnace chamber.

Since the gas flow is large, a good heat transmission is obtained in spite of the small temperature difference between the cooling gas and the articles. Gas flows upwards among the articles, as shown by the arrows. In the upper part of the furnace chamber the gas is caused to recirculate through the gap 16 between the heat-insulating mantle 5 and the tube 9 by the impact of the injection of more gas into the loading space.

Part of the heated gas being pressed down along the gap 16 will be sucked up by the ejector 8 and mixed with cooled gas. Another part will enter the cooling loop in the space 10 through the openings 12 in the lower part of the heat-insulating mantle. Beneath the openings 12 in the heat-insulating mantle, openings 17 are provided, through which cooled gas will enter a space below the bottom insulating plate. Part of this cooled gas will be sucked up by the ejector 7. The cooled gas not being sucked up by the ejector 7 will reenter the cooling loop through the opening 12, thus lowering the temperature of the gas entering through opening 12 into the cooling loop.

In the space 10 between the outer wall of the heat-insulating mantle 5 and the inner wall of the pressure vessel, a sleeve 11 is arranged. Because of the radial thermal gradient, a convection current occurs and the gas flows upwards between the outer side of the heat-insulating mantle 5 and the sleeve 11. At the top of the vessel or distributed along the length of the vessel, the gas is led into the space between the sleeve 11 and the inner side of the water-cooled pressure vessel wall where it is then further cooled upon contact with the pressure vessel wall. The sleeve 11 can also consist of a corrugated sheet, whereby the gas flows in a channel system where every second channel is directed upwards and the other channels are directed downwards.

The temperature of the gas entering the cooling loop through the openings 12 is reduced by the reentering of cooled gas, thus allowing the sleeve 11 to be made of a ductile material such as stainless steel, which is cheaper and easier to handle than sheets of refractory or ceramic materials. There are many advantages with avoiding that the warm gas from the furnace chamber is brought into direct contact with the vessel wall or with the inserted sleeve 11. By directing the flow with the help of the sleeve 11, the temperature of the gas flow will gradually decrease by the radial heat transfer occurring and the heat-transmitting properties of the vessel wall are utilized in a better way.

By designing a heat-insulating mantle which is sealed at the top, a design is obtained which is considerably simpler than rapid cooling systems with openings in the upper part of the heat-insulating mantle. Openings entail problems with sealing and lead to cold gas penetrating into the furnace chamber 4 during the HIP cycle. One advantage of having a heat-insulating mantle with an open bottom is that the pressure in the furnace chamber 4 is somewhat higher than in the space 10, which means that if a leakage should arise in the insulating mantle 5, no cold gas will flow into the furnace chamber 4 and cool parts of the articles. It is possible to introduce in the outer loop, for cooling of the gas against the cylinder wall, an additional system for cooling such as heat exchangers or heat-absorbing bodies which are located in the gas flow.

The invention is also applicable with other combinations of pumps such as electrically or hydraulically driven pumps or motor-driven fans.

In another embodiment of an isostatic press according to the invention, the pressure medium is oil. Such a press can be used for the manufacture of explosives. A pump is provided at the bottom of the press. In a conduit, oil from the hot space of the furnace is mixed with cold oil which either comes from outside or which has been cooled inside the press. The hot oil is led to the pump for mixing oil in a well-insulated tube which extends through the heat insulation around the furnace and enables hot oil to be transported to the location of the pump. The mixed oil is then pressed up through the furnace chamber.

## Claims

1. Press for hot isostatic pressing with a system for rapid cooling of the pressed articles, said isostatic press comprising a pressure vessel (1, 13) in which a furnace chamber (4) is arranged, which is surrounded by a heat-insulating mantle (5) and a heat-insulating bottom plate (6), and a space (10) being formed between said heat-insulating mantle and the wall of the pressure vessel, the heat-insulating mantle (5) being sealed at the top and provided with openings (12,17) in its lower part for communication of pressure medium between the furnace chamber and said space (10), said space (10) comprising means (11) for guiding a flow of pressure medium up and down through the space, **characterized** in that
the heat-insulating mantle (5) is provided with openings (12,17) at two levels in its lower part,
a tube (9) or sleeve surrounds the loading space in the furnace chamber, said tube having an opening in its upper part and being arranged so that a gap (16) is formed between the tube (9) and the heat-insulating mantle (5),
a first pump means (7) is arranged for sucking pressure medium from said space (10) between the heat-insulating mantle and the pressure vessel wall, and
a second pump means (8) is arranged for mixing hot pressure medium from said gap (16) between the tube (9) and the heat-insulating mantle with pressure medium from said first pump means, said mixture being injected into the loading space and moved upwards therein.

2. Isostatic press according to claim 1, **characterized** in that said pressure medium is an inert gas.

3. Isostatic press according to claim 1 or 2, **characterized** in that said openings in the lower part of the heat-insulating mantle comprise a first opening (17) for cooled gas from the space (10) between the heat-insulating mantle and the pressure vessel wall, said cooled gas being in part sucked by the first pump means (7) and the other part being reentered into the cooling loop through a second opening (12) in the heat-insulating mantle, said second opening being located above said first opening and allowing part of the gas from the gap (16) between the tube (9) and the heat-insulating mantle to enter the cooling loop and mix with gas from said first opening (17), the amount of gas from the gap (16) entering the cooling loop in the space (10) corresponding approximately to the amount of gas from the cooling loop being sucked by the first pump means (7).

4. Isostatic press according to any of the preceding claims, **characterized** in that said first pump means comprises a jet pump (7) connected to a propellant gas system (14) arranged outside the press, said jet pump being arranged below the bottom insulation plate.

5. Isostatic press according to claim 4, **characterized** in that said second pump means (8) comprises a jet pump, the propellant gas flow of which comprises gas from said first jet pump, said propellant gas flow being small in relation to the total gas flow through said second pump means (8).

6. Isostatic press according to claim 5, **characterized** in that said second pump means (8) is arranged above the bottom insulation plate (6).

7. Isostatic press according to any of the preceding claims, **characterized** in that said second pump means (8) is connected to said gap (16) between the tube (9) and the heat-insulating mantle (5) by an insulated tube.

8. Isostatic press according to any of the preceding claims, **characterized** in that said first pump means (7) comprises an electrically or hydraulically driven pump or fan, said pump being arranged below the bottom insulation plate (6).

9. Isostatic press according to any of the preceding claims, **characterized** in that said second pump means (8) comprises a jet pump, the propellant gas flow of which comprises gas from said first pump means (7).

10. Isostatic press according to any of the preceding claims, **characterized** in that said second pump means comprises an electrically or hydraulically driven pump or fan.

11. Isostatic press according to any of the preceding claims, **characterized** in that the pressure medium consists of a liquid.

## Patentansprüche

1. Heißisostatische Presse mit einem System zur schnellen Kühlung der gepreßten Gegenstände, zu welcher Presse ein Druckgefäß (1, 13) gehört, in welchem eine Ofenkammer (4) angeordnet ist, die von einem wärmeisolierenden Mantel (5) und einer wärmeisolierenden Bodenplatten (6) umgeben ist, und ein Raum (10) zwischen dem genannten wärmeisolierenden Mantel und der Wand des Druckgefäßes gebildet wird, wobei der wärmeisolierende Mantel (5) am oberen Ende dicht geschlossen ist und mit Öffnungen (12, 17) an seinem unteren Ende für einen Austausch von Druckmittel zwischen der Ofenkammer und dem genannten Raum (10) versehen ist, welcher Raum (10) Einrichtungen (11) zur Führung eines Druckmittelstromes nach oben und nach unten durch den Raum enthält, **dadurch gekennzeichnet**, daß
der wärmeisolierende Mantel (5) auf zwei Ebenen in seinem unteren Teil mit Öffnungen (12, 17) versehen ist,
ein Rohr (9) oder eine Hülse den Beschickungsraum in der Ofenkammer umgibt, wobei die genannte Hülse in ihrem oberen Teil eine Öffnung hat und derart angeordnet ist, daß ein Spalt (16) zwischen dem Rohr (9) und dem wärmeisolierenden Mantel (5) gebildet wird,
eine erste Pumpeneinrichtung (7) zum Ansaugen von Druckmittel aus dem genannten Raum (10) zwischen dem wärmeisolierenden Mantel und der Druckgefäßwand angeordnet ist, und
eine zweite Pumpeinrichtung (8) angeordnet ist zur Mischung von heißem Druckmittel aus dem genannten Spalt (16) zwischen dem Rohr (9) und dem wärmeisolierenden Mantel mit Druckmittel aus der genannten ersten Pumpeneinrichtung, wobei die genannte Mischung in den Beschickungsraum eingeleitet wird und sich dort nach oben bewegt.

2. Heißisostatische Presse nach Anspruch 1, **dadurch gekennzeichnet**, daß das Druckmittel ein imertes Gas ist.

3. Heißisostatische Presse nach Anspruch 1 oder 2, **dadurch gekennzeichnet**, daß zu den genannten Öffnungen im unteren Teil des wärmeisolierenden Mantels eine erste Öffnung (17) für gekühltes Gas aus dem Raum (10) zwischen dem wärmeisolierenden Mantel und der Druckgefäßwand gehört, daß das genannte gekühlte Gas zum Teil von der ersten Pumpeneinrichtung (7) angesaugt wird und der andere Teil durch eine zweite Öffnung (12) in dem wärmeisolierenden Mantel wieder in den Kühlkreis eintritt, daß die zweite Öffnung über der ersten Öffnung liegt und es ermöglicht, daß ein Teil des Gases aus dem Spalt (16) zwischen dem Rohr (9) und dem wärmeisolierenden Mantel in den Kühlkreis eintritt und sich mit Gas aus der ersten Öffnung (17) vermischt, wobei die Menge des Gases aus dem Spalt (16), welches in den Kühlkreis in den Raum (10) eintritt, annähernd der Gasmenge aus dem Kühlkreis entspricht, die von der ersten Pumpeneinrichtung (7) angesaugt wird.

4. Heißisostatische Presse nach einem der vorhergehenden Ansprüche, **dadurch gekennzeichnet**, daß zu der genannten ersten Pumpeneinrichtung eine Düsenpumpe (7) gehört, die an ein Treibgassystem (14) angeschlossen ist, das außerhalb der Presse angeordnet ist, wobei die Düsenpumpe unter der Bodenisolationsplatte angeordnet ist.

5. Heißisostatische Presse nach Anspruch 4, **dadurch gekennzeichnet**, daß zu der zweiten Pumpeneinrichtung (8) eine Düsenpumpe gehört, deren Treibgasstrom Gas von der genannten ersten Düsenpumpe enthält und welcher Treibgasstrom klein ist im Verhältnis zu dem gesamten Gasstrom durch die genannte zweite Pumpeneinrichtung (8).

6. Heißisostatische Presse nach Anspruch 5, **dadurch gekennzeichnet**, daß die genannte zweite Pumpeneinrichtung (8) über der Bodenisolationsplatte (6) angeordnet ist.

7. Heißisostatische Presse nach einem der vorhergehenden Ansprüche, **dadurch gekennzeichnet,** daß die genannte zweite Pumpeneinrichtung (8) an den genannten Spalt (16) zwischen dem Rohr (9) und dem wärmeisolierenden Mantel (5) mittels eines isolierten Rohres angeschlossen ist.

8. Heißisostatische Presse nach einem der vorhergehenden Ansprüche, **dadurch gekennzeichnet,** daß zu der ersten Pumpeneinrichtung (7) eine elektrisch oder hydraulisch getriebene Pumpe oder Lüfter gehört, wobei die genannte Pumpe unter der Bodenisolationsplatte (6) angeordnet ist.

9. Heißisostatische Presse nach einem der vorhergehenden Ansprüche, **dadurch gekennzeichnet,** daß zu der zweiten Pumpeneinrichtung (8) eine Düsenpumpe gehört, deren Treibgasstrom Gas von der genannten ersten Pumpeneinrichtung (7) enthält.

10. Heißisostatische Presse nach einem der vorhergehenden Ansprüche, **dadurch gekennzeichnet,** daß zu der zweiten Pumpeneinrichtung eine elektrisch oder hydraulisch getriebene Pumpe oder Lüfter gehört.

11. Heißisostatische Presse nach einem der vorhergehenden Ansprüche, **dadurch gekennzeichnet,** daß das Druckmittel eine Flüssigkeit ist.

## Revendications

1. Presse de compression isostatique à chaud ayant un système de refroidissement rapide des objets comprimés et comprenant un autoclave (1, 13) dans lequel se trouve une chambre de four (4), entourée d'une chemise (5) calorifuge et d'une plaque de fond (6) calorifuge, un intervalle (10) étant formé entre la chemise calorifuge et la paroi de l'autoclave, la chemise (5) calorifuge étant fermée de manière étanche au sommet et munie d'orifices (12, 17) à sa partie inférieure mettant en communication, pour le fluide de pression, la chambre du four et l'intervalle (10), cet intervalle (10) comprenant des moyens (11) de guidage d'un courant de fluide sous pression vers le haut et vers le bas dans cet intervalle, caractérisée en ce que
la chemise (5) calorifuge est munie d'orifices (12, 17) à deux niveaux dans sa partie inférieure,
un tube (9) ou un manchon entoure l'espace de chargement de la chambre du four, ce tube ayant une ouverture à sa partie supérieure et étant disposé de manière à former un intervalle (16) entre le tube (9) et la chemise (5) calorifuge,
des premiers moyens de pompage (7) sont agencés de manière à aspirer le fluide sous pression de l'intervalle (10) entre la chemise calorifuge et la paroi de l'autoclave, et
de seconds moyens de pompage (8) sont agencés de manière à mélanger du fluide chaud sous pression provenant de l'intervalle (16) entre le tube (9) et la chemise calorifuge, à du fluide sous pression provenant des premiers moyens de pompage, ce mélange étant injecté dans l'espace de chargement et s'y élevant.

2. Presse isostatique suivant la revendication 1, caractérisée en ce que le fluide sous pression est un gaz inerte.

3. Presse isostatique suivant la revendication 1 ou 2, caractérisée en ce que les orifices à la partie inférieure de la chemise calorifuge, comprennent un premier orifice (17) pour du gaz refroidi provenant de l'intervalle (10) compris entre la chemise calorifuge et la paroi de l'autoclave, ce gaz refroidi étant en partie aspiré par les premiers moyens de pompage (7) et l'autre partie étant renvoyée dans la boucle de refroidissement par un second orifice (12) ménagé dans la chemise calorifuge, ce second orifice étant disposé au-dessus du premier et permettant à une partie du gaz provenant de l'intervalle (16) compris entre le tube (9) et la chemise calorifuge, d'entrer dans la boucle de refroidissement et de se mélanger à du gaz provenant du premier orifice (17), la quantité du gaz, provenant de l'intervalle (16) et entrant dans la boucle de refroidissement dans l'intervalle (10), correspondant approximativement à la quantité de gaz, provenant de la boucle de refroidissement et aspirée par les premiers moyens de pompage (7).

4. Presse isostatique selon l'une quelconque des revendications précédentes, caractérisée en ce que les premiers moyens de pompage comprennent un injecteur (7) communiquant avec un système (14) de gaz propulseur disposé à l'extérieur de la presse, l'injecteur étant disposé en-dessous de la plaque de fond isolante.

5. Presse isostatique suivant la revendication 4, caractérisée en ce que les seconds moyens de pompage (8) comprennent un injecteur dont le courant de gaz propulseur comprend du gaz provenant du premier injecteur, ce courant de gaz propulseur étant petit par rapport à tout le courant gazeux passant dans les seconds moyens de pompage (8).

6. Presse isostatique suivant la revendication 5, caractérisée en ce que les seconds moyens de pompage (8) sont disposés au-dessus de la plaque de fond (6) isolante.

7. Presse isostatique suivant l'une quelconque des revendications précédentes, caractérisée en ce que les seconds moyens de pompage (8) communiquent avec l'intervalle (16) compris entre le tube (9) et la chemise (5) calorifuge par un tube isolé.

8. Presse isostatique suivant l'une quelconque des revendications précédentes, caractérisée en ce que les premiers moyens de pompage (7) comprennent une pompe ou un ventilateur entraîné électriquement ou hydrauliquement, cette pompe étant disposée en-dessous de la plaque de fond (6) isolante.

9. Presse isostatique suivant l'une quelconque des revendications précédentes, caractérisée en ce que les seconds moyens de pompage (8) comprennent un injecteur dont le courant de gaz propulseur comprend du gaz provenant des premiers moyens de pompage (7).

10. Presse isostatique suivant l'une quelconque des revendications précédentes, caractérisée en ce que les seconds moyens de pompage comprennent une pompe ou un ventilateur entraîné électriquement ou hydrauliquement.

11. Presse isostatique suivant l'une quelconque des revendications précédentes, caractérisée en ce que le fluide sous pression consiste en un liquide.
